# EUROPÄISCHE PATENTANMELDUNG

(11) **EP 1 129 888 A2**
(43) Veröffentlichungstag der Anmeldung: **05.09.2001**
(21) Anmeldenummer: 01101729.0
(22) Anmeldetag: 25.01.2001
(51) Int. Cl.: B60L 3/00, B60L 7/00

(54) **Bremsüberwachungsanordnung für ein Fahrzeug mit mehreren Bremssystemen**

(30) Priorität: 02.02.2000 DE 10004430
(71) Anmelder: SIEMENS AKTIENGESELLSCHAFT, 80333 München (DE)
(72) Erfinder: Kolbeck, Andreas, 91356 Kirchehrenbach (DE); Mauracher, Peter, Dr., 91088 Bubenreuth (DE)

(57) **Zusammenfassung**

Bekannte Bremsüberwachungsanordnungen mit einem Verzögerungssensor und einer Überwachungsschaltung, die bei Unterschreiten der Differenz zwischen einem Verzögerungsistwert (bᵢₛₜ) und einem Verzögerungssollwert (bₛₒₗₗ) unter einen gewählten Schwellwert (bₛ) bei anliegendem Notaus-Befehl ein Fehlersignal abgibt, benötigen aufwendige Hard- und Software für die Fehlerbehandlung in Form von Stellsignalen für die einzelnen Bremssysteme.

Die vorliegende Bremsüberwachungsanordnung sieht vor, daß das Fehlersignal bei einer Gefahr- oder Zwangsbremsung auf die Öffnung der Notaus-Schleife des Fahrzeugs wirkt.

Die Bremsüberwachungsanordnung ist für Fahrzeuge mit elektrischen und zusätzlichen mechanischen Bremssystemen, also insbesondere für elektrische Triebfahrzeuge vorgesehen.

## Beschreibung

Die Erfindung betrifft eine Bremsüberwachungsanordnung für ein Fahrzeug mit mehreren Bremssystemen, insbesondere für ein schienengebundenes Triebfahrzeug, mit einem Verzögerungssensor und einer Überwachungsschaltung, die bei Unterschreiten der Differenz zwischen einem Verzögerungsistwert und einem Verzögerungssollwert unter einen gewählten Schwellwert bei einer Gefahr- oder Zwangsbremsung ein Fehlersignal abgibt.

Eine solche Bremsüberwachungsschaltung ist aus DE-C 195 10 755 bekannt.

Die Bremsanordnung nach dieser Schrift ist für schienengebundene Fahrzeuge zur Überwachung der Bremswirkung bei einer Notbremsung vorgesehen. Der Bremsvorgang erfolgt bei elektrischen Triebfahrzeugen vorrangig elektrisch, das heißt durch Energierückspeisung ins Netz oder Speisung von Bremswiderständen, da so ein verschleißfreies Bremsen möglich ist. Nur darüber hinaus erforderliche Bremskräfte werden durch Druckluftbremsen, magnetisch betätigte Schienenbremsen sowie gegebenenfalls weitere Bremssysteme aufgebracht, was eine aufwendige Steuerungstechnik erfordert, die mit einer, wenn auch kleinen, Fehlerwahrscheinlichkeit behaftet ist.

Nach der DE-C 195 10 755 wird bei einer Notbremsung nun der Bremsvorgang überwacht, indem die Bremswirkung durch einen Verzögerungssensor gemessen und mit einer Überwachungsschaltung überwacht wird. Unterschreitet die Verzögerung bei einer Notbremsung einen voreingestellten Wert, so wird ein Fehlersignal ausgelöst, mit dem Stellbefehle an alle vorhandenen Bremssysteme des Triebfahrzeugs ausgegeben werden.
Damit die Überwachungsschaltung unabhängig von den eigentlichen Ansteuerschaltungen der Bremssysteme arbeiten kann, muß sie in der Lage sein, für jedes vorhandene Bremssystem ein individuelles Stellsignal zu erzeugen. Hierzu sind aufwendige Hardwareeinrichtungen für die Fehlerbehandlung und bei einem Rechnereinsatz auch eine aufwendige Software nötig. Soll darüber hinaus eine Überbremsung vermieden werden, indem die Bremsleistungen der einzelnen Bremssysteme individuell dosiert werden, so wird die Überwachungsschaltung weiter verkompliziert.

Der Erfindung liegt die Aufgabe zugrunde, eine Bremsüberwachungsanordnung der eingangs genannten Art anzugeben, die auch ohne aufwendige Hardware, insbesondere ohne jeglichen Rechnereinsatz, die sichere Überwachung einer Gefahren- oder Zwangsbremsung erlaubt.

Erfindungsgemäß wird die Aufgabe gelöst durch die Merkmale des Anspruchs 1. Zweckmäßige Ausgestaltungen sind Gegenstand der Unteransprüche.

Die Bremsüberwachungsanordnung benötigt keine spezielle Baugruppe für die Fehlerbehandlung und somit keinen Rechner oder vergleichbare Hardware. Ist keine ausreichende Bremswirkung vorhanden, wird die Notaus-Schleife des Fahrzeugs geöffnet, wodurch alle mechanischen Bremsen des Fahrzeugs betätigt werden und das Fahrzeug dann trotz Versagen eines wichtigen Brems- oder Steuerungssystems sicher gebremst wird. Ein eventuelles Überbremsen wird, da dieser Betriebsfall äußerst selten eintreten wird, bewußt in Kauf genommen.

Die Bremsüberwachungsanordnung wirkt völlig unabhängig von vorhandenen Informationen oder Komponenten des Fahrzeugs. Sie arbeitet vollständig autark, wodurch ein echter Sicherheitsgewinn gegenüber herkömmlicher Bremstechnik erzielt wird. Sicherungsnachweise für das gesamte Fahrzeug können anhand der Überwachungsanordnung ohne Berücksichtigung der Fahrzeugsteuerungssoftware durchgeführt werden. Neben der Überwachung der reinen Regelungs- und Steuerungstechnik des Fahrzeugs. sichert die Bremsüberwachungsanordnung den gesamten Pfad von der Erzeugung eines Bremsbefehls bis zur Wirkung, also der ausreichende Verzögerung des Fahrzeugs. Der nachträgliche Einbau in vorhandene Fahrzeuge ist ohne größeren Aufwand möglich.

Als Verzögerungssensoren kommen übliche Beschleunigungsaufnehmer in Betracht. Daneben können auch Drehzahlsensoren am Antriebssystem verwendet werden, deren Signale zur Bildung eines Beschleunigungswertes differenziert werden. Die Drehzahlsensoren sind in diesem Fall zusätzlich zu eventuell bereits vorhandenen Drehzahlsensoren eines Geschwindigkeitsmeßsystems zu installieren, um die Selbständigkeit und Redundanz der Bremsüberwachungsanordnung zu wahren.

Damit die Bremsüberwachungsanordnung nicht jedes Mal wirksam wird, wenn das Fahrzeug zum Stillstand kommt, da in diesem Fall bei einem anhängigen Gefahren- oder Zwangsbremsbefehl immer der Schwellwert der Soll-Ist-Differenz der Verzögerung unterschritten wird, kann die Signalweitergabe zusätzlich von der Geschwindigkeit des Fahrzeugs abhängig gemacht werden. Ist die Geschwindigkeit nahe Null, so wird entweder der Schwellwert für die Soll-Ist-Differenz der Verzögerung hochgesetzt oder für die Weitergabe des Signals neben der Schwellwertüberschreitung und dem Vorliegen eines Zwangs- oder Gefahrenbremsbefehls als drittes Kriterium das Vorliegen einer Mindestgeschwindigkeit des Fahrzeugs vorausgesetzt. Die Fahrzeuggeschwindigkeit sollte hierbei wiederum unabhängig von ohnehin vorhandenen Geschwindigkeitsmeßsystemen bestimmt werden. Gegebenenfalls kann die Geschwindigkeitsermittlung durch Integration des Signals des Verzögerungssensors erfolgen, wobei von Zeit zu Zeit eine Kalibrierung mit einem gemessenen Geschwindigkeitsistwert erfolgen muß, um einem Abdriften des Integrationswertes entgegenzuwirken.

Die Bremsüberwachungsanordnung ist für alle Fahrzeuge mit mehreren unabhängigen Bremssystemen geeignet, also sowohl für elektrische Bahnen im Nah-, Regional und Fernverkehr als auch beispielsweise für Elektrobusse.

Die Erfindung soll anhand eines Ausführungsbeispiels noch näher erläutert werden. Die zugehörige Zeichnung zeigt den prinzipiellen Aufbau der Bremsüberwachungsanordnung eines elektrischen Triebfahrzeugs mit elektrischen Bremseinrichtungen und mindestens einem zusätzlichen mechanischen Bremssystem.

Ein Zwangsbremsbefehl des Fahrsperrengerätes wird an die Bremsüberwachungsanordnung geführt. Diese mißt nach Ablauf einer Totzeit von ca, 0,5 s (Meßwert bist) die Verzögerung des Fahrzeugs. Liegt die an einer Vergleichsstelle ermittelte Differenz zu einem vorgegebenen Verzögerungssollwert bₛₒₗₗ für eine Zeitspanne von etwa 0,05 s unterhalb eines voreingestellten Schwellwertes bₛ, der an einer zweiten Vergleichs-stelle anliegt, so schaltet ein Schwellwertschalter 1 ein Signal auf ein UND-Glied 2, an dem als zweites Signal eine Information über eine Gefahren- oder Zwangsbremsung anliegt. Liegt ein Gefahren- oder Zwangsbremsbefehl noch vor, so schaltet der Ausgang des UND-Gliedes 2 einen RS-Flip-Flop 3 ein, das mit seinem Ausgangssignal die Notaus-Schleife des Triebfahrzeugs öffnet. Die mechanischen Bremsen des Fahrzeugs werden darauf aktiviert und bremsen das Fahrzeug bis zum Stillstand ab.

Die Notaus-Schleife wird nach Quittieren der Zwangsbremse durch einen Reset-Befehl am RS-Flip-Flop 3 wieder geschlossen.

Bei einer Gefahrenbremsung wirkt die Bremsüberwachungsanordnung analog, nur daß das auslösende Signal durch die Betätigung des Fahrhebels durch den Fahrzeugführer ausgelöst wird.

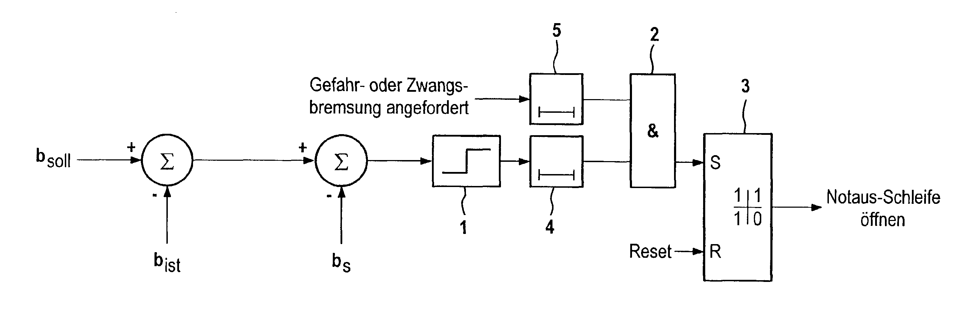

## Patentansprüche

1. Bremsüberwachungsanordnung für ein Fahrzeug mit mehreren Bremssystemen, insbesondere für ein schienengebundenes Triebfahrzeug, mit einem Verzögerungssensor und einer Überwachungsschaltung, die bei Unterschreiten der Differenz zwischen einem Verzögerungsistwert (bᵢₛₜ) und einem Verzögerungssollwert (bₛₒₗₗ) unter einen gewählten Schwellwert (bₛ) bei einer Gefahr- oder Zwangsbremsung ein Fehlersignal abgibt,
**dadurch gekennzeichnet,**
daß das Fehlersignal auf die Öffnung der Notaus-Schleife des Fahrzeugs wirkt.

2. Bremsüberwachungsanordnung nach Anspruch 1,
**dadurch gekennzeichnet,**
daß die Weitergabe des Fehlersignals von einer Mindestgeschwindigkeit des Fahrzeuges abhängig gemacht ist.

3. Bremsüberwachungsanordnung nach Anspruch 1 oder 2,
**dadurch gekennzeichnet,**
daß der Verzögerungssensor ein Beschleunigungsaufnehmer ist.

4. Bremsüberwachungsanordnung nach Anspruch 1 oder 2,
**dadurch gekennzeichnet,**
daß der Verzögerungssensor aus mindestens einem Drehzahlsensor am Antriebssystem des Fahrzeugs besteht, dessen oder deren Signale Differenziergliedern zugeführt sind.

5. Bremsüberwachungsanordnung nach einem der Ansprüche 2 bis 3,
**dadurch gekennzeichnet,**
daß als Maß für die Geschwindigkeit des Fahrzeugs das in einem Integrator integrierte Signal des Beschleunigungsaufnehmers verwendet ist.
